(19) Europäisches Patentamt
European Patent Office
Office européen des brevets

(11) **EP 4 317 500 A1**

(12) **EUROPEAN PATENT APPLICATION**
published in accordance with Art. 153(4) EPC

(43) Date of publication:
**07.02.2024 Bulletin 2024/06**

(21) Application number: **22779732.1**

(22) Date of filing: **28.02.2022**

(51) International Patent Classification (IPC):
*C22C 21/00* (2006.01)      *C22C 21/02* (2006.01)
*C22F 1/00* (2006.01)      *C22F 1/04* (2006.01)
*C22F 1/043* (2006.01)      *H01M 4/134* (2010.01)
*H01M 4/46* (2006.01)

(52) Cooperative Patent Classification (CPC):
**C22C 21/00; C22C 21/02; C22F 1/00; C22F 1/04;
C22F 1/043; H01M 4/134; H01M 4/46;** Y02E 60/10

(86) International application number:
**PCT/JP2022/008138**

(87) International publication number:
**WO 2022/209507 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021060797**

(71) Applicant: **Sumitomo Chemical Company Limited
Tokyo 103-6020 (JP)**

(72) Inventors:
• **NAKATA, Yuki
Tsukuba-shi, Ibaraki 300-3294 (JP)**
• **YAMAGUCHI, Takitaro
Tsukuba-shi, Ibaraki 300-3294 (JP)**
• **MATSUMOTO, Shingo
Tsukuba-shi, Ibaraki 300-3294 (JP)**
• **KUMAGAI, Toshiaki
Niihama-shi, Ehime 792-8521 (JP)**

(74) Representative: **Vossius & Partner
Patentanwälte Rechtsanwälte mbB
Siebertstrasse 3
81675 München (DE)**

(54) **NEGATIVE ELECTRODE FOR LITHIUM SECONDARY BATTERY, AND LITHIUM SECONDARY BATTERY**

(57)    This anode for a lithium secondary battery is formed of an aluminum alloy containing Al, at least one element M1 selected from the group consisting of C, Si, Ge, Sn, and Pb, and at least one element M2 selected from the group consisting of Sr, Na, Sb, Ca, Te, Ba, Li, and K, in which a ratio of a mass of the element M1 to a total mass of the aluminum alloy is 0.01 mass% or more and 8 mass% or less, and a ratio of a total mass of the element M2 to the total mass of the aluminum alloy is more than 0.001 mass% and 1.0 mass% or less.

EP 4 317 500 A1

## Description

[Technical Field]

The present invention relates to an anode for a lithium secondary battery, and a lithium secondary battery.
Priority is claimed on Japanese Patent Application No. 2021-060797, filed on March 31, 2021, the content of which is incorporated herein by reference.

[Background Art]

Rechargeable lithium secondary batteries have been already in practical use not only for small power sources in mobile phone applications, notebook personal computer applications, and the like but also for medium-sized and large-sized power sources in automotive applications, power storage applications, and the like.
Various attempts have been made to improve battery characteristics of lithium secondary batteries. For example, Patent Document 1 describes an anode for a secondary battery having a porous aluminum alloy containing at least one of silicon and tin as an anode active material.

[Citation List]

[Patent Document]

[Patent Document 1]
Japanese Unexamined Patent Application, First Publication No. 2011-228058

[Summary of Invention]

[Technical Problem]

An anode containing a silicon-containing aluminum alloy occludes and releases lithium and expands and contracts during charging and discharging. Silicon has a larger theoretical capacity than aluminum, and a volume change in which silicon expands and contracts by occluding and releasing lithium is larger than that of aluminum. Therefore, a crystal structure of aluminum may be destroyed due to expansion and contraction of silicon caused by charging and discharging. Therefore, in such a lithium secondary battery, a cycle retention ratio tends to decrease. In order to further improve the cycle retention ratio, there is still room for improvement in an anode for a lithium secondary battery.
The present invention has been made in view of the above circumstances, and an object thereof is to provide an anode for a lithium secondary battery capable of realizing a lithium secondary battery having a high cycle retention ratio, and a lithium secondary battery using the same.

[Solution to Problem]

The present invention has the following aspects.

[1] An anode for a lithium secondary battery, the anode being formed of an aluminum alloy containing Al, at least one element M1 selected from the group consisting of C, Si, Ge, Sn, and Pb, and at least one element M2 selected from the group consisting of Sr, Na, Sb, Ca, Te, Ba, Li, and K,

in which a ratio of a mass of the element M1 to a total mass of the aluminum alloy is 0.01 mass% or more and 8 mass% or less, and
a ratio of a mass of the element M2 to the total mass of the aluminum alloy is more than 0.001 mass% and 1.0 mass% or less.

[2] An anode for a lithium secondary battery, including:

a cladding material having an anode active material layer and an anode current collector layer,
in which the anode active material layer is formed of an aluminum alloy containing Al, at least one element M1 selected from the group consisting of C, Si, Ge, Sn, and Pb, and at least one element M2 selected from the group consisting of Sr, Na, Sb, Ca, Te, Ba, Li, and K,
a ratio of a mass of the element M1 to a total mass of the aluminum alloy is 0.01 mass% or more and 8 mass% or less, and

a ratio of a mass of the element M2 to the total mass of the aluminum alloy is more than 0.001 mass% and 1.0 mass% or less.

[3] The anode for a lithium secondary battery according to [1] or [2], in which a ratio of a mass of Al to the total mass of the aluminum alloy is 90.95 mass% or more and 99.989 mass% or less.

[4] The anode for a lithium secondary battery according to any one of [1] to [3],

in which the aluminum alloy contains precipitated particles containing the element M1 in an alloy matrix,

the precipitated particles include first precipitated particles having a particle size of 1 $\mu m^2$ or more and less than 10 $\mu m^2$ and second precipitated particles having a particle size of 10 $\mu m^2$ or more,

a number density of the first precipitated particles observed on a surface of the aluminum alloy is 5,000 /mm$^2$ or less, and

a number density of the second precipitated particles observed on the surface of the aluminum alloy is 500 /mm$^2$ or less.

[5] The anode for a lithium secondary battery according to any one of [1] to [4],

in which the aluminum alloy contains precipitated particles containing the element M1 in an alloy matrix,

the precipitated particles include first precipitated particles having a particle size of 1 $\mu m^2$ or more and less than 10 $\mu m^2$ and second precipitated particles having a particle size of 10 $\mu m^2$ or more, and

an occupied area of the first and second precipitated particles per unit area of the aluminum alloy is 2.0% or less.

[6] A lithium secondary battery including:

the anode for a lithium secondary battery according to any one of [1] to [5].

[Advantageous Effects of Invention]

According to the present invention, it is possible to provide an anode for a lithium secondary battery capable of realizing a lithium secondary battery having a high cycle retention ratio, and a lithium secondary battery using the same.

[Brief Description of Drawings]

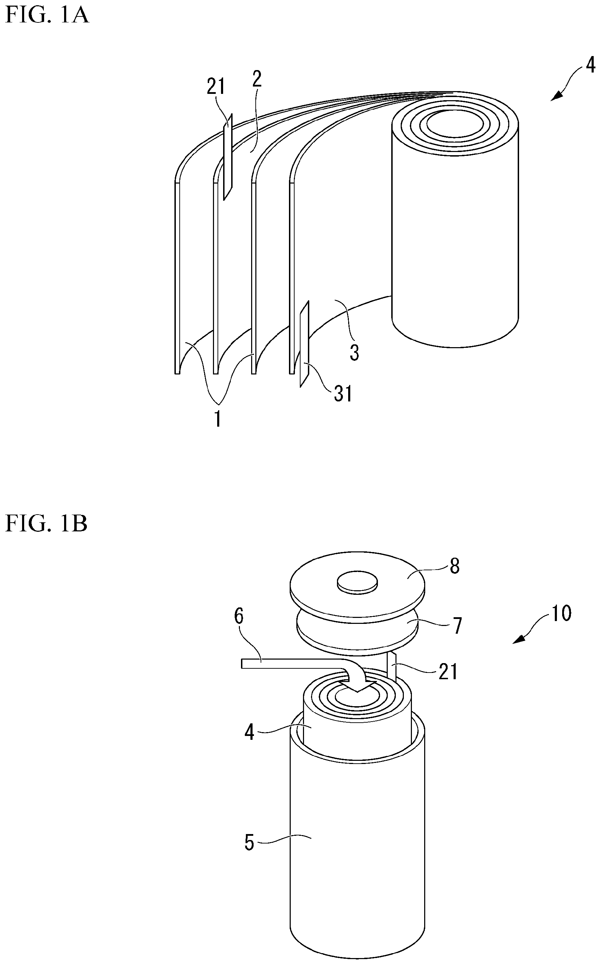

FIG. 1A is a schematic configuration view showing an example of a lithium secondary battery.
FIG. 1B is a schematic configuration view showing the example of the lithium secondary battery.

[Description of Embodiments]

Hereinafter, an anode for a lithium secondary battery according to an aspect of the present invention will be described. In a plurality of embodiments to be described below, preferable examples or conditions may be shared. In addition, in the present specification, each term is defined as follows.

In a case where a numerical range is described as, for example, "1 to 10 $\mu m$", the numerical range means a range from 1 $\mu m$ to 10 $\mu m$ and means a numerical range including 1 $\mu m$ as a lower limit and 10 $\mu m$ as an upper limit.

A composition of the anode for a lithium secondary battery is measured using, for example, an optical emission spectrometer (for example, ARL-4460 manufactured by Thermo Fisher Scientific Inc.) or an ICP (high-frequency inductively coupled plasma) optical emission spectrometer (for example, SPS5000 manufactured by Seiko Instruments Inc.).

A "discharge capacity retention ratio" means a ratio of a discharge capacity to a charge capacity of a lithium secondary battery when a cycle test is conducted in which the lithium secondary battery is repeatedly charged and discharged a predetermined number of times under specific conditions.

In the present specification, a value measured by conducting a test in which charge and discharge cycles are repeated under the conditions shown below is referred to as the discharge capacity retention ratio. In addition, 1C means an amount of current that enables full charge or full discharge in 1 hour.

Test temperature: 25°C

Charging maximum voltage 4.2 V, charging current 1 mA (0.2 C), constant current constant voltage charging
Discharging minimum voltage 3.4 V, discharging current 1 mA (0.2 C), constant current discharging

A value obtained by dividing a discharge capacity in an n-th cycle by a discharge capacity in a first cycle is calculated, and this value is taken as the discharge capacity retention ratio (%) after n cycles. In the present specification, "high cycle retention ratio" means that the discharge capacity retention ratio after 100 cycles is 90% or more. Here, the first cycle means the first charging and discharging after four cycles of charging and discharging performed as a part of a manufacturing process after the lithium secondary battery is assembled.

[First Embodiment]

<Anode for Lithium Secondary Battery>

The anode for a lithium secondary battery of the present embodiment is an anode for a lithium secondary battery formed of an aluminum alloy containing Al, at least one element M1 selected from the group consisting of C, Si, Ge, Sn, and Pb, and at least one element M2 selected from the group consisting of Sr, Na, Sb, Ca, Te, Ba, Li, and K, in which a ratio of a mass of the element M1 to a total mass of the aluminum alloy is 0.01 mass% or more and 8 mass% or less, and a ratio of a mass of the element M2 to the total mass of the aluminum alloy is more than 0.001 mass% and 1.0 mass% or less. Hereinafter, the anode for a lithium secondary battery of the present embodiment may be simply referred to as an anode.

The anode for a lithium secondary battery in the present embodiment is formed of the aluminum alloy containing Al, the at least one element M1 selected from the group consisting of C, Si, Ge, Sn, and Pb, and the at least one element M2 selected from the group consisting of Sr, Na, Sb, Ca, Te, Ba, Li, and K. A ratio of a mass of Al to the total mass of the aluminum alloy is preferably 90.95 mass% or more and 99.989 mass% or less, more preferably 91.85 mass% or more and 99.897 mass% or less, and even more preferably 91.92 mass% or more and 99.397 mass% or less. When the ratio of the mass of Al to the total mass of the aluminum alloy is less than 90.95 mass%, a foil easily breaks during rolling, and it becomes difficult to form a foil. When the ratio of the mass of Al to the total mass of the aluminum alloy is more than 99.989 mass%, cycle characteristics decrease.

The ratio of the mass of the element M1 to the total mass of the aluminum alloy is 0.01 mass% or more and 8 mass% or less, preferably 0.1 mass% or more and 8 mass% or less, and more preferably 0.6 mass% or more and 8 mass% or less. When the ratio of the mass of the element M1 to the total mass of the aluminum alloy is 0.6 mass% or more, crystal grains of Al are refined, and the cycle characteristics of the lithium secondary battery can be improved. When the mass of the element M1 with respect to the total mass of the aluminum alloy is 8 mass% or less, precipitation of the element M1 in association with the charging and discharging of the lithium secondary battery can be suppressed. In order to facilitate the refinement of the crystal grains of Al, the element M1 is preferably at least one element selected from the group consisting of Si, Ge, and Sn.

The element M1 has a very large occlusion amount of lithium compared to aluminum. Therefore, when the lithium secondary battery using the anode formed of the aluminum alloy containing the element M1 is charged and discharged, a volume expansion during insertion of lithium and a volume contraction during desorption of lithium are large. As a result, there are cases where the crystal structure of Al is destroyed and a cycle life is shortened.

The anode of the present embodiment is an aluminum alloy containing the at least one element M2 selected from the group consisting of Sr, Na, Sb, Ca, Te, Ba, Li, and K. The element M2 can refine crystal grains of the element M1 in the aluminum alloy, that is, precipitated particles. Therefore, in the anode of the present embodiment, the volume expansion during insertion of lithium and the volume contraction during desorption of lithium during charging and discharging are suppressed. In addition, the refined crystal grains of the element M1 are finely dispersed in the aluminum alloy, and the crystal grains of Al are refined. As a result, the cycle characteristics of the lithium secondary battery can be improved. From the viewpoint of suppressing coarsening of the precipitated element M1, the element M1 is preferably at least one element selected from the group consisting of Sr, Ca, Te, and Ba.

Since the element M2 contained in the anode of the present embodiment is added at the time of casting an aluminum alloy, the element M2 is dispersed throughout the crystals in a state of a simple substance or in a state in which a compound with Al or the element M1 is formed. On the other hand, Li occluded by charging is biased toward a cathode side and is unevenly distributed on a surface of the anode to form an alloy phase, so that Li is in a different distribution state from a case where the anode of the present embodiment contains Li as an element M.

The ratio of the mass of the element M2 to the total mass of the aluminum alloy is more than 0.001 mass% and 1.0 mass% or less, preferably 0.003 mass% or more and 0.1 mass% or less, and more preferably 0.003 mass% or more and 0.03 mass% or less. When the ratio of the mass of the element M2 to the total mass of the aluminum alloy is more than 0.001 mass%, the crystal grains of the element M1 can be sufficiently refined, and the element M1 can be finely dispersed in the aluminum alloy. As a result, the crystal grains of Al can be refined. When the ratio of the mass of the element M2 to the total mass of the aluminum alloy is 1.0 mass% or less, aggregation of the element M2 in the aluminum alloy can be suppressed. When the ratio of the mass of the element M2 to the total mass of the aluminum alloy is 1.0 mass% or less, a decrease in a capacity of the anode can be suppressed.

The aluminum alloy may contain elements other than Al, the element M1, and the element M2. Examples of the elements other than Al, Si, and the elements M include Cu, Ti, Mn, Ga, Ni, V, and Zn. When a ratio of a mass of each of the elements other than the element M1 and the element M2 to the total mass of the aluminum alloy is 0.05 weight% or less, a decrease in corrosion resistance of the aluminum alloy can be suppressed.

The aluminum alloy may contain precipitated particles in an alloy matrix. In the present specification, the precipitated particles are particles containing the element M1, and are defined as particles in which a content ratio of the element M1 is 10 mass% or more with respect to a total mass of the precipitated particles. The precipitated particles may contain at least one of Al and the element M1 and may further contain an element other than Al, the element M1, and the element M2. Among the precipitated particles observed on a surface of the aluminum alloy, a number density of first precipitated particles having a particle size of 1 $\mu$m$^2$ or more and less than 10 $\mu$m$^2$ is preferably 5,000 /mm$^2$ or less, more preferably 4,000 /mm$^2$ or less, and even more preferably 3,000 /mm$^2$ or less. When the number density of the first precipitated particles is 5,000 /mm$^2$ or less, it can be said that the crystal grains of the element M1 can be sufficiently refined. A lower limit of the number density of the first precipitated particles is not particularly limited, and is, for example, 100 /mm$^2$. An upper limit and the lower limit of the number density of the first precipitated particles can be combined.

Among the precipitated particles observed on the surface of the aluminum alloy, a number density of the second precipitated particles having a particle size of 10 $\mu$m$^2$ or more is preferably 500 /mm$^2$ or less, more preferably 450 /mm$^2$ or less, and even more preferably 430 /mm$^2$ or less. When the number density of the second precipitated particles is 10 /mm$^2$ or less, the corrosion resistance is improved. A lower limit of the number density of the second precipitated particles is not particularly limited, and is, for example, 10 /mm$^2$. An upper limit and the lower limit of the number density of the second precipitated particles can be combined.

The number densities of the first and second precipitated particles are values obtained by the following method. After the surface of the aluminum alloy is mirror-polished, the surface is etched with an etchant. A 1 mass% sodium hydroxide aqueous solution is used as the etchant. An optical micrograph of the etched surface where the precipitated particles containing the element M1 have come off due to the etching and remain as marks is taken, and portions with the marks are regarded as the precipitated particles containing the element M1 and analyzed. Hereinafter, an item described as "precipitated particle" in an observed image indicates this mark. The number densities are calculated by counting the number of precipitated particles having a particle size of 1 $\mu$m$^2$ or more and less than 10 $\mu$m$^2$ and the number of precipitated particles having a particle size of 10 $\mu$m$^2$ or more in a region of 0.8 mm $\times$ 1.5 mm in the optical micrograph. The particle size is determined from an area occupied by each precipitated particle observed in an optical micrograph.

An occupied area of the first and second precipitated particles per unit area of the aluminum alloy is preferably 2.0% or less, more preferably 1.8% or less, and even more preferably 1.0% or less. When the occupied area of the first and second precipitated particles per unit area of the aluminum alloy is 2.0% or less, the corrosion resistance of the aluminum alloy is improved. A lower limit of the occupied area of the first and second precipitated particles per unit area of the aluminum alloy is not particularly limited, but is 0.001 %. An upper limit and the lower limit of the occupied area of the first and second precipitated particles per unit area of the aluminum alloy can be combined.

The occupied area of the first and second precipitated particles per unit area of the aluminum alloy can be calculated from a sum of the particle sizes of the individual precipitated particles observed in the region of 0.8 mm $\times$ 1.5 mm in the above optical micrograph, that is, a sum of the areas occupied by the individual first and second precipitated particles.

<Manufacturing Method of Anode for Lithium Secondary Battery>posit

An example of a manufacturing method of the anode for a lithium secondary battery of the present embodiment will be described. The manufacturing method of the anode of the present embodiment preferably includes an aluminum alloy casting step and a rolling step.

(Casting Step)

First, a predetermined amount of the element M1 is added to high-purity aluminum and melted at about 680°C or higher and 800°C or lower to obtain a molten alloy of aluminum and the element M1. As for the high-purity aluminum, high-purity aluminum refined by a refining method described later can be used. Examples of the element M1 include high-purity silicon having a purity of 99.999 mass% or more, germanium, tin, and lead. As a raw material, silicon, germanium, tin, lead, or an alloy of aluminum and the element M1 may be used.

The molten alloy is preferably subjected to a treatment of removing gas and non-metallic inclusions for cleaning (for example, a vacuum treatment of molten aluminum). The vacuum treatment is performed, for example, under the condition of 700°C or higher and 800°C or lower, 1 hour or longer and 10 hours or shorter, and a degree of vacuum of 0.1 Pa or more and 100 Pa or less.

As the treatment for cleaning the molten alloy, a treatment using a flux, or a treatment of blowing an inert gas or chlorine gas can also be used.

Immediately before casting the molten alloy, a predetermined amount of the element M2 is added to the molten alloy of aluminum and the element M1 and the mixture is stirred for 30 seconds or longer and 5 minutes or shorter to obtain a molten alloy of aluminum, the element M1, and the element M2. In a case where the element M2 is an alkali metal or alkaline earth metal such as Sr, Na, Ca, Ba, Li, or K, as the element M2, an alloy of aluminum and the element M2 is preferable. As the alloy of aluminum and Sr, for example, an SRM500 master alloy (Sr10% -Al90%) manufactured by Nikkin Flux Inc. can be used. In a case where the element M2 is Sb or Te, a simple substance of Sb or Te or an alloy of aluminum and Sb or Te can be used. Examples of the alloy of aluminum and Sb include Al-Sb master alloy (for example, AlSb10 manufactured by KBM Affilips, (The Netherlands)).

The molten alloy of aluminum, the element M1, and the element M2 is usually cast in a casting mold to obtain an ingot. As the casting mold, an iron or graphite casting mold heated to 50°C or higher and 200°C or lower is used. The anode of the present embodiment can be cast by a method of pouring a molten alloy at 680°C or higher and 800°C or lower into a casting mold. Alternatively, an ingot can also be obtained by semi-continuous casting which is generally used.

(Rolling Step)

The obtained alloy ingot can be directly cut and used as the anode. In a case where the ingot is rolled, extruded, or forged into a plate material or a mold material, the ingot can be easily used as a cladding material.

In the rolling step of the ingot, for example, at least one of hot rolling and cold rolling is performed to process the ingot into a plate material. The hot rolling of the ingot is repeatedly performed, for example, under the condition of a temperature of 350°C or higher and 550°C or lower and a working ratio per rolling pass of 2% or more and 30% or less until the aluminum ingot has a desired thickness.

A working ratio r per rolling pass (one pass) is a sheet thickness reduction ratio when passing through a rolling roll once, and is calculated by Formula 1 below.

$$r = (T_0 - T)/T_0 \times 100 \ldots \text{Formula 1}$$

(in Formula 1, $T_0$ indicates a thickness before passing through the rolling roll, and T indicates a thickness after passing through the rolling roll)

The cold rolling is repeatedly performed, for example, under the condition of a temperature lower than a recrystallization temperature of aluminum and a working ratio per rolling pass of 1% or more and 20% or less until the aluminum ingot has a desired thickness. The temperature of the cold rolling may be 80°C or lower from room temperature.

After the cold rolling, a heat treatment may further be performed. The heat treatment after the cold rolling is usually performed in the air, but may be performed in a nitrogen atmosphere, a vacuum atmosphere, or the like. A plate material work-hardened by the heat treatment can be softened, and furthermore, there are cases where various physical properties, specifically, hardness, conductivity, and tensile strength are adjusted by controlling the crystal structure.

In the present embodiment, the anode is preferably a metal foil. A thickness of the metal foil is preferably 5 $\mu$m or more, more preferably 6 $\mu$m or more, and even more preferably 7 $\mu$m or more. In addition, the thickness is preferably 200 $\mu$m or less, more preferably 190 $\mu$m or less, and even more preferably 180 $\mu$m or less. An upper limit and a lower limit thereof can be randomly combined. In the present embodiment, the thickness is preferably 5 $\mu$m or more and 200 $\mu$m or less. In the present embodiment, the thickness of the metal foil may be measured at any point using a thickness gauge or a caliper.

··Aluminum Purification Method

In a case of using high-purity aluminum in the present embodiment, examples of the refining method for purifying aluminum include a segregation method and a three-layer electrolytic method.

The segregation method is a purification method utilizing the segregation phenomenon during solidification of molten aluminum, and a plurality of methods have been put into practical use. As one form of the segregation method, there is a method of pouring molten aluminum into a container, and allowing refined aluminum to solidify from a bottom portion while heating and stirring the molten aluminum at an upper portion while rotating the container. By the segregation method, high-purity aluminum having a purity of 99.99 mass% or more can be obtained.

The three-layer electrolytic method is an electrolytic method for purifying aluminum. As one form of the three-layer electrolytic method, first, aluminum or the like having a relatively low purity (for example, a grade of a purity of 99.9 mass% or less in JIS-H2102) is put into an Al-Cu alloy layer. Thereafter, in the method, with an anode layer in a molten state, an electrolyte layer containing, for example, aluminum fluoride and barium fluoride is disposed thereon, and high-purity aluminum is precipitated on a cathode layer. High-purity aluminum having a purity of 99.999 mass% or more can be obtained by the three-layer electrolytic method.

The method of purifying aluminum is not limited to the segregation method and the three-layer electrolytic method, and other known methods such as a zone melting refining method and an ultra-high vacuum melting method may be used.

[Modification Example]

As another aspect of the present invention, an anode for a lithium secondary battery includes: a cladding material having an anode active material layer and an anode current collector layer, in which the anode active material layer is formed of an aluminum alloy containing Al, at least one element M1 selected from the group consisting of C, Si, Ge, Sn, and Pb, and at least one element M2 selected from the group consisting of Sr, Na, Sb, Ca, Te, Ba, Li, and K, a ratio of a mass of the element M1 to a total mass of the aluminum alloy is 0.01 mass% or more and 8 mass% or less, and a ratio of a mass of the element M2 to the total mass of the aluminum alloy is more than 0.001 mass% and 1.0 mass% or less.

The anode active material layer is the anode for a lithium secondary battery according to the first embodiment, that is, the aluminum alloy. Therefore, detailed descriptions thereof will be omitted.

(Anode Current Collector Layer)

Examples of the anode current collector layer include a strip-shaped member formed of a metal material as a forming material. As the metal material, one selected from the group consisting of Al, Cu, Ni, Mg, and Mn may be used as a simple substance, an alloy containing at least two or more of these may be used, or stainless steel may be used. Among these, as the material of the anode current collector layer, it is preferable to use at least one of Cu and Al as a forming material and to process the forming material into a thin film because it is difficult for Cu and Al to form an alloy with lithium and Cu and Al can be easily processed. In addition, in a case where the anode current collector layer is used, the anode and the anode current collector layer are laminated to be integrated to obtain a cladding material.

(Manufacturing Method of Cladding Material)

Examples of a method of manufacturing the cladding material include the following method. The anode active material layer is manufactured by the same method as the anode for a lithium secondary battery described in the first embodiment. Bonding surfaces of the anode active material layer and an anode current collector are each degreased and polished in one direction using a brush or the like. Accordingly, a surface roughness Ra of the bonding surface of the anode active material layer and a surface roughness Ra of the bonding surface of the anode current collector layer are adjusted to 0.7 $\mu$m or more.

The bonding surfaces of the anode active material layer and the anode current collector layer are combined to obtain a laminate. The obtained laminate is preheated at 300°C to 500°C and hot-rolled under the condition in which a rolling reduction in initial rolling is 45% to 70%. Thereafter, additional cold rolling is performed to obtain a rolled material having an anode thickness of 7 to 550 $\mu$m, that is, a cladding material.

In a case where an anode active material is formed of a powder, examples of a method of causing the anode current collector layer to hold an anode mixture include, similarly to a case of a cathode, a method of press-forming an anode mixture containing the anode active material and a binder, and a method of forming the anode mixture into a paste using a solvent or the like, applying the paste onto the anode current collector layer, drying the paste, and pressing the paste to be compressed.

A conductive material may further be added to the anode mixture. As the conductive material, those mentioned as a conductive material of a cathode material, which will be described later, can be used.

<Lithium Secondary Battery>

Next, a secondary battery having the anode of the present embodiment will be described. As an example, a lithium secondary battery using a lithium cathode active material for the cathode will be described.

As an aspect, the lithium secondary battery of the present embodiment includes a cathode, an anode, a separator interposed between the cathode and the anode, and an electrolytic solution disposed between the cathode and the anode.

FIGS. 2A and 2B are schematic views showing an example of the lithium secondary battery of the present embodiment. A cylindrical lithium secondary battery 10 of the present embodiment is manufactured as follows.

First, as shown in FIG. 2A, a pair of separators 1 having a strip shape, a strip-shaped cathode 2 having a cathode lead 21 at one end, and a strip-shaped anode 3 having an anode lead 31 at one end are stacked in order of the separator 1, the cathode 2, the separator 1, and the anode 3 and are wound to form an electrode group 4.

Next, as shown in FIG. 2B, the electrode group 4 and an insulator (not shown) are accommodated in a battery can 5, a can bottom is then sealed, the electrode group 4 is impregnated with an electrolytic solution 6, and an electrolyte is disposed between the cathode 2 and the anode 3. Furthermore, an upper portion of the battery can 5 is sealed with a top insulator 7 and a sealing body 8, whereby the lithium secondary battery 10 can be manufactured.

Examples of a shape of the electrode group 4 include a columnar shape in which a cross-sectional shape when the electrode group 4 is cut in a direction perpendicular to a winding axis becomes a circle, an ellipse, a rectangle, or a rectangle with rounded corners.

In addition, as a shape of the lithium secondary battery having the electrode group 4, a shape defined by IEC60086, which is a standard for a battery defined by the International Electrotechnical Commission (IEC), or by JIS C 8500 can be adopted. Examples thereof include shapes such as a cylindrical shape or a square shape.

Furthermore, the lithium secondary battery is not limited to a wound type configuration described above, and may have a stacked type configuration in which a stacked structure of a cathode, a separator, an anode, and a separator is repeatedly stacked. A so-called coin type battery, a button type battery, and a paper type (or sheet type) battery are exemplary examples of the stacked type lithium secondary battery.

Hereinafter, each configuration will be described in order.

(Cathode)

The cathode of the present embodiment can be manufactured by first adjusting a cathode mixture containing a cathode active material, a conductive material, and a binder, and causing a cathode current collector to hold the cathode mixture.

(Cathode Active Material)

As the cathode active material, a material containing a lithium-containing compound or a compound containing another metal can be used. Examples of the lithium-containing compound include a lithium cobalt complex oxide having a layered structure, a lithium nickel complex oxide having a layered structure, a lithium manganese complex oxide having a spinel structure, and a lithium iron phosphate having an olivine structure. Examples of the compound containing another metal include oxides such as titanium oxide, vanadium oxide, and manganese dioxide, and sulfides such as titanium sulfide and molybdenum sulfide.

(Conductive Material)

A carbon material can be used as the conductive material included in the cathode of the present embodiment. Examples of the carbon material include graphite powder, carbon black (for example, acetylene black), and a fibrous carbon material. Carbon black is fine particles and has a large surface area. Therefore, the addition of a small amount of carbon black to the cathode mixture increases the conductivity inside the cathode and thus improves charge and discharge efficiencies and output characteristics. However, when the carbon black is added too much, both a binding force between the cathode mixture and the cathode current collector by the binder and a binding force inside the cathode mixture decrease, which causes an increase in internal resistance.

A proportion of the conductive material in the cathode mixture is preferably 5 parts by mass or more and 20 parts by mass or less with respect to 100 parts by mass of the cathode active material. In a case of using a fibrous carbon material such as graphitized carbon fiber or carbon nanotube as the conductive material, it is possible to reduce the proportion of the conductive material in the cathode mixture.

(Binder)

A thermoplastic resin can be used as the binder included in the cathode of the present embodiment. Examples of the thermoplastic resin include fluororesins such as polyvinylidene fluoride, polytetrafluoroethylene, tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene.

These thermoplastic resins may be used as a mixture of two or more. By using a fluororesin and a polyolefin resin as the binder and setting a ratio of the fluororesin to the entire cathode mixture to 1 mass% or more and 10 mass% or less and a ratio of the polyolefin resin to 0.1 mass% or more and 2 mass% or less, a cathode mixture having both high adhesion to the cathode current collector and high bonding strength in the cathode mixture can be obtained.

(Cathode Current Collector)

As the cathode current collector in the cathode of the present embodiment, a strip-shaped member formed of a metal material such as Al, Ni, or stainless steel as a forming material can be used. Among these, as the current collector, from the viewpoint of easy processing and low cost, it is preferable to use Al as the forming material and process Al into a thin film. As the cathode current collector, an alloy having the same component as Al of the anode may be used.

Examples of a method of causing the cathode current collector to hold the cathode mixture include a method of press-forming the cathode mixture on the cathode current collector. In addition, the cathode mixture may be held by the cathode current collector by forming the cathode mixture into a paste using an organic solvent, applying the obtained paste of the cathode mixture to at least one side of the cathode current collector, drying the paste, and pressing the paste to be fixed.

In a case where the cathode mixture is formed into a paste, examples of the organic solvent that can be used include: an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone (hereinafter, may be referred to as NMP).

Examples of a method of applying the paste of the cathode mixture to the cathode current collector include a slit die coating method, a screen coating method, a curtain coating method, a knife coating method, a gravure coating method, and an electrostatic spraying method.

The cathode can be manufactured by the method mentioned above.

(Anode)

As the anode included in the lithium secondary battery of the present embodiment, the anode of the first embodiment or the modification example is used.

(Separator)

As the separator included in the lithium secondary battery of the present embodiment, for example, a material that is made of a material such as a polyolefin resin such as polyethylene or polypropylene, a fluororesin, or a nitrogen-containing aromatic polymer and has a form such as a porous film, a non-woven fabric, or a woven fabric can be used. In addition, two or more of these materials may be used to form the separator, or these materials may be laminated to form the separator.

In the present embodiment, an air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to have good permeation during battery use (during charging and discharging).

In addition, a porosity of the separator is preferably 30 vol% or more and 80 vol% or less and more preferably 40 vol% or more and 70 vol% or less with respect to a total volume of the separator. The separator may be a laminate of separators having different porosities.

(Electrolytic Solution)

The electrolytic solution included in the lithium secondary battery of the present embodiment contains an electrolyte and an organic solvent.

Examples of the electrolyte contained in the electrolytic solution include lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB refers to bis(oxalato)borate), LiFSI (here, FSI refers to bis(fluorosulfonyl)imide), lower aliphatic carboxylic acid lithium salts, and $LiAlCl_4$, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

In addition, as the organic solvent that is contained in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, propyl propionate, and γ-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by further introducing a fluoro group into these organic solvents (those obtained by substituting one or more hydrogen atoms in the organic solvents with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has a wide operating temperature range, does not easily deteriorate even when charging or discharging is performed at a high current rate, and does not easily deteriorate even during a long-term use.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing an ether having a fluorine substituent such as pentafluoropropyl methyl ether or 2,2,3,3-tetrafluoropropyl difluoromethyl ether and dimethyl carbonate is even more preferable because a capacity retention ratio is high even when charging or discharging is performed at a high current rate.

The electrolytic solution may contain additives such as tris(trimethylsilyl) phosphate and tris(trimethylsilyl) borate.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolytic solution is held in a polymer compound can also be used. In addition, inorganic solid electrolytes containing sulfides such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$ can be adopted, and a mixture of two or more thereof may be used. By using these solid electrolytes, the safety of the lithium secondary battery can be further enhanced.

In addition, in a case of using the solid electrolyte in the lithium secondary battery of the present embodiment, there may be cases where the solid electrolyte serves as the separator, and in such a case, the separator may not be required.

The lithium secondary battery of the present embodiment has the above-described anode, and thus has a high cycle retention ratio.

As another aspect, the present invention includes the following aspects.

[7] An anode for a lithium secondary battery, the anode being formed of an aluminum alloy containing Al, at least one element M1 selected from the group consisting of C, Si, Ge, Sn, and Pb, and at least one element M2 selected from the group consisting of Sr, Na, Sb, Ca, Te, Ba, Li, and K,

in which a ratio of a mass of the element M1 to a total mass of the aluminum alloy is 0.1 mass% or more and 8 mass% or less, and
a ratio of a mass of the element M2 to the total mass of the aluminum alloy is 0.003 to 0.1 mass%.

[8] An anode for a lithium secondary battery, including: a cladding material having an anode active material layer and an anode current collector layer,

in which the anode active material layer is formed of an aluminum alloy containing Al, at least one element M1 selected from the group consisting of C, Si, Ge, Sn, and Pb, and at least one element M2 selected from the group consisting of Sr, Na, Sb, Ca, Te, Ba, Li, and K,
a ratio of a mass of the element M1 to a total mass of the aluminum alloy is 0.1 mass% or more and 8 mass% or less, and
a ratio of a mass of the element M2 to the total mass of the aluminum alloy is 0.003 to 0.1 mass%.

[9] The anode for a lithium secondary battery according to [7] or [8], in which a ratio of a mass of Al to the total mass of the aluminum alloy to the total mass of the aluminum alloy is 91.85 mass% or more and 99.897 mass% or less.

[10] The anode for a lithium secondary battery according to any one of [7] to [9], in which the aluminum alloy contains a precipitated particle containing the element M1 in an alloy matrix,

the precipitated particles include first precipitated particles having a particle size of 1 $\mu$m$^2$ or more and less than 10 $\mu$m$^2$ and second precipitated particles having a particle size of 10 $\mu$m$^2$ or more,
a number density of the first precipitated particle observed on a surface of the aluminum alloy is 100 /mm$^2$ or

more and 4,000 /mm$^2$ or less, and
a number density of the second precipitated particle observed on the surface of the aluminum alloy is 10 /mm$^2$ or more and 450 /mm$^2$ or less.

[11] The anode for a lithium secondary battery according to any one of [7] to [10],

in which the aluminum alloy contains a precipitated particle containing the element M1 in an alloy matrix,
the precipitated particles include first precipitated particles having a particle size of 1 $\mu$m$^2$ or more and less than 10 $\mu$m$^2$ and second precipitated particles having a particle size of 10 $\mu$m$^2$ or more,
an occupied area of the first and second precipitated particles per unit area of the aluminum alloy is 0.001% or more and 2.0% or less.

[12] A lithium secondary battery including: the anode for a lithium secondary battery according to any one of [7] to [11].

[Examples]

Hereinafter, the present invention will be described in detail with reference to examples, but the present invention is not limited by the following description.

(Example 1)

[Production of Anode]

An aluminum alloy used in Example 1 was manufactured by the following method. High-purity aluminum (purity: 99.99 mass% or more) and silicon (purity: 99.999 mass% or more) manufactured by Tokuyama Corporation were heated and held at 760°C to be melted, thereby obtaining a molten Al-Si alloy.
Next, the molten Al-Si alloy was degassed by being held at a temperature of 700°C for 2 hours under the condition of a degree of vacuum of 50 Pa. Immediately before casting the molten Al-Si alloy, SRM100 master alloy (Sr10%-Al90%) manufactured by Nikkin Flux Inc. was added thereto and stirred for 1 minute, and the mixture was then cast in a cast iron casting mold (22 mm × 150 mm × 200 mm) dried at 150°C, thereby obtaining an Al-Si-Sr ingot. At this time, ratios of Si and Sr to a total mass of the Al-Si-Sr ingot were 1 mass% and 0.003 mass%, respectively.
After performing face milling on both sides of the ingot by 2 mm, cold rolling was performed from a thickness of 20 mm at a working ratio of 99.6%, thereby obtaining a rolled material having g a thickness of 50 $\mu$m. The rolled material was cut into a disk shape of φ15 mm to manufacture an anode.

[Production of Counter Electrode]

A LiCoO$_2$ foil (thickness 35 $\mu$m: manufactured by Nippon Chemical Industrial Co., Ltd.) was cut into a disk shape of φ14.5 mm to manufacture a counter electrode.

[Production of Electrolytic Solution]

In a mixed solvent prepared by mixing ethylene carbonate (EC) and diethyl carbonate (DEC) at EC:DEC = 30:70 (volume ratio), LiPF$_6$ was dissolved to 1.0 mol/liter to produce an electrolytic solution.

[Production of Lithium Secondary Battery]

A polyethylene porous separator was disposed between the anode and the counter electrode and accommodated in a battery case (standard 2032). The electrolytic solution was injected into the battery case, and the battery case was sealed, whereby a coin type (full cell) lithium secondary battery having a diameter of 20 mm and a thickness of 3.2 mm was produced.

[Charge/Discharge Evaluation: Initial Charging and Discharging]

The separator and the cathode were sufficiently impregnated with the electrolytic solution by allowing the coin type lithium secondary battery to be left at room temperature for 10 hours. Next, initial charging and discharging were performed by performing constant current constant voltage charging for 5 hours in which constant current charging (occlusion of Li in Al) to 4.2 V at 1 mA (0.2 C) was performed at room temperature and constant voltage charging at 4.2 V was then performed, and thereafter performing constant current discharging in which discharging (release of Li from Al) to 3.4 V at 1 mA (0.2 C) was performed.

[Charge/Discharge Evaluation: Discharge Capacity Retention Ratio]

After the initial charging and discharging, charging at 1 mA (0.2C) and discharging at 1 mA (0.2C) were repeated 100 times under the same conditions as in the initial charging and discharging. A discharge capacity retention ratio during n cycles of charging and discharging was calculated as follows.

$$\text{Discharge capacity retention ratio during n cycles (\%)} = \text{discharge capacity}$$

$$\text{during n cycles/discharge capacity during one cycle} \times 100$$

[Number Density and Occupied Area of Precipitated Particles on Surface of Aluminum Alloy]

For the aluminum alloy which was the ingot obtained in Example 1, a number density of precipitated particles on a surface thereof and an occupied area of the precipitated particles per unit area were calculated by the above-described methods.

(Examples 2 to 4)

Coin type lithium secondary batteries of Examples 2 to 4 were produced according to the procedure as in Example 1 except that the ratios of Sr to the total mass of the molten Al-Si-Sr alloy were set to 0.01 mass%, 0.03 mass%, and 0.1 mass%, respectively, in [Production of Anode], and the discharge capacity retention ratio was measured. In addition, the number density and the occupied area of the precipitated particles on the surface of the aluminum alloy were calculated.

(Comparative Examples 1 and 2)

Coin type lithium secondary batteries of Comparative Examples 1 and 2 were produced according to the procedure as in Example 1 except that the ratios of Sr to the total mass of the molten Al-Si-Sr alloy were set to 0 mass% and 0.001 mass%, respectively, in [Production of Anode], and the discharge capacity retention ratios were measured. In addition, the number density and the occupied area of the precipitated particles on the surface of the aluminum alloy were calculated.

The number density of the precipitated particles on the surface of the aluminum alloy and the occupied area of the precipitated particles per unit area of Examples 1 to 4 and Comparative Examples 1 and 2, and the discharge capacity retention ratio of the lithium secondary battery having the aluminum alloy as the anode are shown in Table 1.

[Table 1]

| | Particle density (/mm$^2$) | | Occupied area (%) | Discharge capacity retention ratio (%) |
|---|---|---|---|---|
| | Particle size: 1 $\mu$m$^2$ or more and less than 10 $\mu$m$^2$ | Particle size: 10 $\mu$m$^2$ or more | | |
| Example 1 | 1860 | 130 | 0.93 | 101.5 |
| Example 2 | 1340 | 130 | 0.66 | 100.6 |
| Example 3 | 1560 | 140 | 0.80 | 101.4 |
| Example 4 | 2720 | 410 | 1.74 | 91.2 |
| Comparative Example 1 | 2660 | 690 | 2.15 | 78.1 |
| Comparative Example 2 | 6460 | 1240 | 4.91 | 33.8 |

The number density of the precipitated particles of 1 $\mu$m$^2$ or more and less than 10 $\mu$m$^2$ on the surface of the aluminum alloy of Examples 1 to 4 was 1,340 to 2,720 /mm$^2$. The number density of the precipitated particles of 10 $\mu$m$^2$ or more was 130 to 410 /mm$^2$. The occupied area of the precipitated particles per unit area was 0.66% to 1.74%. The discharge capacity retention ratio of the lithium secondary battery having the aluminum alloy as the anode in Examples 1 to 4 was 91.2% to 101.5%.

In addition, as another aspect of the present invention, a cladding material in which the anode of Examples 1 to 4 and an anode current collector are laminated can also be used as the anode. An example in which the cladding material is used as the anode will be described below.

(Manufacturing Example 1)

In [Production of Anode], an anode produced by the same procedure as in Example 1 is obtained. This is used as an anode active material layer, a rolled material of A5052 alloy, which is an aluminum-magnesium alloy, is used as an anode current collector, and the anode active material layer and an anode current collector layer are laminated to form a cladding material.

Specifically, bonding surfaces of the anode active material layer and the anode current collector layer are each degreased and polished in one direction using a brush. Accordingly, a surface roughness Ra of the bonding surface of the anode active material layer is adjusted to 1.0 $\mu$m and a surface roughness Ra of the bonding surface of the anode current collector layer is adjusted to 1.0 $\mu$m.

The bonding surfaces of the anode active material layer and the anode current collector layer are combined to obtain a laminate. The obtained laminate is preheated at 350°C and hot-rolled under the condition in which a rolling reduction in initial rolling is 50%. Thereafter, additional cold rolling is performed to obtain a rolled material having an anode thickness of 25 $\mu$m. The rolled material is cut into a disk shape of $\Phi$15 mm to manufacture a cladding material including the anode active material layer and the anode current collector layer, and the cladding material is used as the anode.

(Manufacturing Example 2)

In [Production of anode], an anode produced by the same procedure as in Example 1 is obtained. This is used as an anode active material layer, a rolled material of A3003 alloy, which is an aluminum-manganese alloy, is used as an anode current collector, and the anode active material layer and an anode current collector layer are laminated to form a cladding material.

Specifically, bonding surfaces of the anode active material layer and the anode current collector layer are each degreased and polished in one direction using a brush. Accordingly, a surface roughness Ra of the anode active material layer is adjusted to 1.0 $\mu$m and a surface roughness Ra of the bonding surface of the anode current collector layer is adjusted to 1.0 $\mu$m.

The bonding surfaces of the anode active material layer and the anode current collector layer are combined to obtain a laminate. The obtained laminate is preheated at 350°C and hot-rolled under the condition in which a rolling reduction in initial rolling is 50%. Thereafter, additional cold rolling is performed to obtain a rolled material having an anode thickness of 25 $\mu$m. The rolled material is cut into a disk shape of $\Phi$ 15 mm to manufacture a cladding material including the anode active material layer and the anode current collector layer, and the cladding material is used as the anode.

The anodes of Manufacturing Examples 1 and 2 have the aluminum alloy of Example 1 as the anode active material layer, so that the number density of precipitated particles of 1 $\mu$m$^2$ or more and less than 10 $\mu$m$^2$ and the number density of precipitated particles of 10 $\mu$m$^2$ or more on the surface of the aluminum alloy, and the occupied area of the precipitated particles per unit area are the same as in Example 1. Therefore, there is a high probability that the discharge capacity retention ratio of the lithium secondary battery using the anode of Manufacturing Examples 1 and 2 is equal to or higher than those of Examples 1 to 4.

[Industrial Applicability]

According to the present invention, it is possible to provide an anode for a lithium secondary battery capable of realizing a lithium secondary battery having a high cycle retention ratio, and a lithium secondary battery using the same.

[Reference Signs List]

    1: Separator

2: Cathode
3: Anode
4: Electrode group
5: Battery can
6: Electrolytic solution
7: Top insulator
8: Sealing body
10: Lithium secondary battery
21: Cathode lead
31: Anode lead


**Claims**

1. An anode for a lithium secondary battery, the anode being formed of an aluminum alloy containing Al, at least one element M1 selected from the group consisting of C, Si, Ge, Sn, and Pb, and at least one element M2 selected from the group consisting of Sr, Na, Sb, Ca, Te, Ba, Li, and K,

   wherein a ratio of a mass of the element M1 to a total mass of the aluminum alloy is 0.01 mass% or more and 8 mass% or less, and
   a ratio of a mass of the element M2 to the total mass of the aluminum alloy is more than 0.001 mass% and 1.0 mass% or less.

2. An anode for a lithium secondary battery, comprising:

   a cladding material having an anode active material layer and an anode current collector layer,
   wherein the anode active material layer is formed of an aluminum alloy containing Al, at least one element M1 selected from the group consisting of C, Si, Ge, Sn, and Pb, and at least one element M2 selected from the group consisting of Sr, Na, Sb, Ca, Te, Ba, Li, and K,
   a ratio of a mass of the element M1 to a total mass of the aluminum alloy is 0.01 mass% or more and 8 mass% or less, and
   a ratio of a mass of the element M2 to the total mass of the aluminum alloy is more than 0.001 mass% and 1.0 mass% or less.

3. The anode for a lithium secondary battery according to Claim 1 or 2,
   wherein a ratio of a mass of Al to the total mass of the aluminum alloy is 90.95 mass% or more and 99.989 mass% or less.

4. The anode for a lithium secondary battery according to any one of Claims 1 to 3,

   wherein the aluminum alloy contains precipitated particles containing the element M1 in an alloy matrix,
   the precipitated particles include first precipitated particles having a particle size of 1 $\mu$m$^2$ or more and less than 10 $\mu$m$^2$ and second precipitated particles having a particle size of 10 $\mu$m$^2$ or more,
   a number density of the first precipitated particles observed on a surface of the aluminum alloy is 5,000 /mm$^2$ or less, and
   a number density of the second precipitated particles observed on the surface of the aluminum alloy is 500 /mm$^2$ or less.

5. The anode for a lithium secondary battery according to any one of Claims 1 to 4,

   wherein the aluminum alloy contains precipitated particles containing the element M1 in an alloy matrix,
   the precipitated particles include first precipitated particles having a particle size of 1 $\mu$m$^2$ or more and less than 10 $\mu$m$^2$ and second precipitated particles having a particle size of 10 $\mu$m$^2$ or more, and
   an occupied area of the first and second precipitated particles per unit area of the aluminum alloy is 2.0% or less.

6. A lithium secondary battery comprising:
   the anode for a lithium secondary battery according to any one of Claims 1 to 5.

FIG. 1A

FIG. 1B

## INTERNATIONAL SEARCH REPORT

| International application No. |
| --- |
| **PCT/JP2022/008138** |

### A. CLASSIFICATION OF SUBJECT MATTER

**C22C 21/00**(2006.01)i; **C22C 21/02**(2006.01)i; **C22F 1/00**(2006.01)i; **C22F 1/04**(2006.01)i; **C22F 1/043**(2006.01)i; **H01M 4/134**(2010.01)i; **H01M 4/46**(2006.01)i

FI: H01M4/46; H01M4/134; C22C21/00 N; C22C21/02; C22F1/04 Z; C22F1/043; C22F1/00 623; C22F1/00 622; C22F1/00 661C; C22F1/00 681; C22F1/00 683; C22F1/00 685A; C22F1/00 685Z; C22F1/00 686B; C22F1/00 694A; C22F1/00 694B; C22F1/00 691Z

According to International Patent Classification (IPC) or to both national classification and IPC

### B. FIELDS SEARCHED

Minimum documentation searched (classification system followed by classification symbols)

C22C21/00; C22C21/02; C22F1/00; C22F1/04; C22F1/043; H01M4/134; H01M4/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | JP 2011-228058 A (KOBELCO KAKEN KK) 10 November 2011 (2011-11-10) paragraphs [0025], [0028], test no. 7 | 1, 3, 6 |
| Y | | 1-3, 6 |
| Y | JP 10-255852 A (SANYO ELECTRIC CO LTD) 25 September 1998 (1998-09-25) paragraph [0018] | 1-3, 6 |
| Y | WO 2016/039323 A1 (HITACHI MAXELL, LTD) 17 March 2016 (2016-03-17) example 1 | 2 |
| Y | JP 08-293302 A (MATSUSHITA ELECTRIC IND CO LTD) 05 November 1996 (1996-11-05) paragraph [0014] | 2 |
| A | JP 2013-105655 A (SHIN ETSU CHEM CO LTD) 30 May 2013 (2013-05-30) entire text, all drawings | 1-6 |

☑ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **19 April 2022** | **10 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/008138**

**C. DOCUMENTS CONSIDERED TO BE RELEVANT**

| Category* | Citation of document, with indication, where appropriate, of the relevant passages | Relevant to claim No. |
|---|---|---|
| A | WO 2013/146658 A1 (FURUKAWA ELECTRIC CO., LTD.) 03 October 2013 (2013-10-03)<br>entire text, all drawings | 1-6 |
| A | JP 2002-520783 A (MINNESOTA MINING AND MANUFACTURING COMPANY) 09 July 2002 (2002-07-09)<br>entire text, all drawings | 1-6 |
| A | JP 2001-297757 A (SUMITOMO METAL IND LTD) 26 October 2001 (2001-10-26)<br>entire text, all drawings | 1-6 |
| A | JP 2001-118574 A (SANYO ELECTRIC CO LTD) 27 April 2001 (2001-04-27)<br>entire text, all drawings | 1-6 |
| A | CN 101445936 A (NO.725 RESEARCH INSTITUTE, CHINA SHIPBUILDING INDUSTRY CORPORATION) 03 June 2009 (2009-06-03)<br>entire text, all drawings | 1-6 |

Form PCT/ISA/210 (second sheet) (January 2015)

**INTERNATIONAL SEARCH REPORT**
Information on patent family members

International application No.

**PCT/JP2022/008138**

| Patent document cited in search report | | | Publication date (day/month/year) | Patent family member(s) | | | Publication date (day/month/year) |
|---|---|---|---|---|---|---|---|
| JP | 2011-228058 | A | 10 November 2011 | WO | 2011/129020 | A1 | |
| | | | | CN | 102812580 | A | |
| JP | 10-255852 | A | 25 September 1998 | (Family: none) | | | |
| WO | 2016/039323 | A1 | 17 March 2016 | US example 1 | 2017/0263926 | A1 | |
| | | | | EP | 3193396 | A1 | |
| | | | | CN | 106663787 | A | |
| JP | 08-293302 | A | 05 November 1996 | (Family: none) | | | |
| JP | 2013-105655 | A | 30 May 2013 | US entire text, all drawings | 2013/0122368 | A1 | |
| | | | | EP | 2595223 | A2 | |
| WO | 2013/146658 | A1 | 03 October 2013 | KR | 10-2014-0017646 | A | |
| | | | | CN | 103733393 | A | |
| JP | 2002-520783 | A | 09 July 2002 | US entire text, all drawings | 6255017 | B1 | |
| | | | | WO | 2000/003444 | A1 | |
| JP | 2001-297757 | A | 26 October 2001 | (Family: none) | | | |
| JP | 2001-118574 | A | 27 April 2001 | US entire text, all drawings | 6492063 | B1 | |
| CN | 101445936 | A | 03 June 2009 | (Family: none) | | | |

Form PCT/ISA/210 (patent family annex) (January 2015)

**EP 4 317 500 A1**

**Patent documents cited in the description**

- JP 2021060797 A
- JP 2011228058 A